# EUROPEAN PATENT SPECIFICATION

(11) **EP 0 791 735 B1**
(45) Date of publication and mention of the grant of the patent: **25.07.2001**
(21) Application number: 96112816.2
(22) Date of filing: 08.08.1996
(51) Int. Cl.: F02D 13/04, F02B 37/14, F02B 39/10, F02B 37/00, F02B 37/10

(54) **Vehicle driving unit with related control method**
Antriebseinheit eines Fahrzeuges und entsprechendes Regelungsverfahren
Unité d'entraînement d'un véhicule et procédé de commande correspondante

(30) Priority: 11.08.1995 IT TO950681
(43) Date of publication of application: 27.08.1997
(73) Proprietor: IVECO FIAT S.p.A., 10156 Torino (IT)
(72) Inventor: Cuniberti, Francesco, 10100 Torino (IT)
(74) Representative: Boggio, Luigi

(56) References cited:
- EP-A- 0 210 833
- EP-A- 0 477 579
- EP-A- 0 543 210
- PATENT ABSTRACTS OF JAPAN vol. 95, no. 003 & JP-A-07 071264 (MITSUBISHI MOTORS CORP), 14 March 1995,

## Description

This invention concerns a driving unit for a vehicle, particularly an industrial vehicle, of the type consisting of a supercharging turbocompressor with a decompression braking device or exhaust brake.

Driving units of the above type are known, such units also having a reversible electrical machine operationally coupled to the turbocompressor and controlled so as to function as motor or as generator according to vehicle operating conditions. See for example the exhaust brake system of EP-A-210 833.

In particular, at low running speeds and where high torque is required, the electrical machine is used as motor to drive the turbocompressor at a higher speed than that produced by the reduced flow of the exhaust gases, thus enhancing the supercharging effect and hence the torque delivered by the engine.

In other operating conditions, and especially when there is excess mechanical power at the turbocompressor or no driving torque is required, the electrical machine is used as generator, so that it absorbs mechanical power and generates electrical power to supply other loads or to charge the vehicle battery. Typically the electrical machine coupled to the turbocompressor is used as generator in cases in which the exhaust brake is activated; in this case, in addition to the braking action due to the work lost by internal braking, there is recovery of the residual energy of the exhaust gases in the form of electrical power.

Driving units of the type briefly described have a number of drawbacks.

When the exhaust brake is operated at low running speeds, as may occur for example along a downhill stretch, the braking effect obtainable by decompression is not satisfactory as the level of engine induction pressure is low and the compression work dissipated is consequently restricted.

Driving units are also known in which, in order to improve exhaust brake slow running performance, a turbocompressor with variable geometry turbine is used; this is however a high-cost solution and does not fully resolve the problem.

The purpose of the present invention is to produce an heat engine capable of supplying a high braking torque particularly at low running speeds.

The said purpose is achieved by this invention, as it concerns a vehicle driving unit consisting of:
- an heat engine having a number of cylinders, a feed manifold and an exhaust manifold, the said cylinders each having at least one intake valve communicating with the said feed manifold and at least one exhaust valve communicating with the said exhaust manifold;
- a decompression braking device on the said engine;
- an engine supercharging device consisting of a turbine connected to the said exhaust manifold, a compressor connected to the said feed manifold and a first reversible electrical machine operationally coupled to the said compressor and the said turbine in order to exchange mechanical power with them;
- means of control of the said first electrical machine in response to input signals linked to operating parameters of the said vehicle;
characterised by the fact that the said means of control include means of supply of electrical power to the said first electrical machine, which therefore operates as a motor to increase the said compressor's rotating speed in response to at least a first input signal indicating a state of activation of the said decompression braking device.

In a preferred form of implementation of this invention the unit also includes a second reversible electrical machine operationally connected to an engine driving shaft and electrically connected to the first electrical machine for the purpose of exchanging electrical power with it.

This invention also concerns a method of control of a vehicle driving unit consisting of:
- an entothermal engine having a number of cylinders, a feed manifold and an exhaust manifold, the said cylinders each having at least one intake valve communicating with the said feed manifold and at least one exhaust valve communicating with the said exhaust manifold;
- a decompression braking device on the said engine;
- an engine supercharging device consisting of a turbine connected to the said exhaust manifold, a compressor connected to the said feed manifold and a first reversible electrical machine operationally coupled to the said compressor and the said turbine in order to exchange mechanical power with them;
the said method consisting, of the phases of recording activation of the said decompression braking device and supplying electrical power to the said first electrical machine in order to cause it to operate as motor and increase the said compressor's rotating speed when the said decompression braking device is activated.

For a better understanding of this invention a preferred form of implementation is described below purely for purposes of example without limiting effect, and with reference to the attached drawings, in which:
Figure 1 is a functional diagram of a driving unit constructed according to the requirements of this invention;
Figure 2 is a logical diagram of the method of control of the unit in Figure 1 according to this invention;
Figure 3 is a diagram representing characteristic magnitudes of the unit in Figure 1;
Figure 4 is a functional diagram of a driving unit according to a different form of implementation of this invention and
Figure 5 is a diagram analogous to the one in Figure 3, but referring to the driving unit in Figure 4.

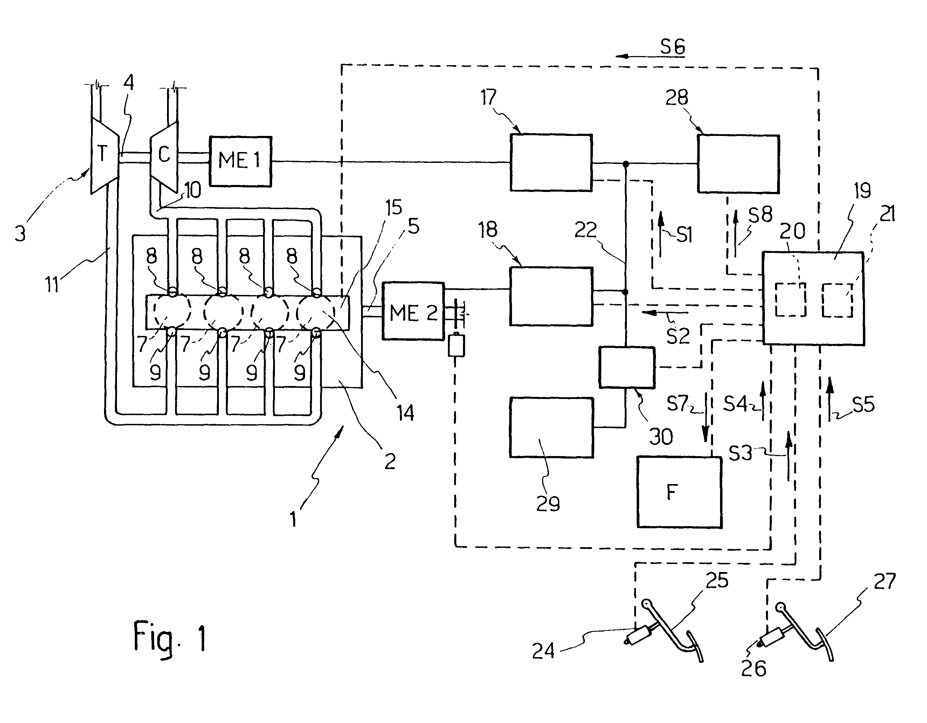

With reference to Figure 1, a driving unit as a whole for an industrial vehicle is indicated by 1.

The unit 1 consists mainly of an heat engine 2 and an engine supercharging device 3 or turbocompressor, to which a reversible electrical machine ME1 is operationally coupled.

Advantageously the unit 1 also includes a second reversible electrical machine ME2, which is operationally coupled to a driving shaft 5 of the engine 2.
The two machines ME1 and ME2 are preferably of alternating current type, brushless, having a rotor with permanent magnets and stator windings.

Lastly the unit 1 includes a circuit 6 controlling the machines ME1 and ME2; the said circuit, described in greater detail below, is capable of operating the said machines as motor or as generator according to the unit 1 operating conditions, and regulating the electrical power from and to the said machines.

More precisely, the engine 2 comprises a number of cylinders 7, each of which has at least one intake valve 8 and at least one exhaust valve 9 interposed between the cylinder and a feed manifold 10 or an exhaust manifold 11 respectively.

The valves 8, 9 are controlled by a known type of distribution not illustrated here, which includes a decompression braking device 14 also of known type and therefore not described in detail.

For example, the device 14 may be of type designed to produce an auxiliary opening of the valves through variation in the valve play as described in European Patent EP-A-0 543 210, the content of which is incorporated simply by reference, as regards the necessary parts.

The device 14 has an electrically operated activating element consisting for example of a solenoid valve controlling a hydraulic actuator (not illustrated) producing variation in the valve play.

The turbocompressor 3 consists of a fixed geometry turbine T connected to the exhaust manifold 11 and a compressor C connected to the feed manifold 10. The turbine T and compressor C have respective rotors (not illustrated) angularly coupled together by a common shaft 4 to which the rotor (again not illustrated) of the electrical machine ME1 is rigidly connected; the said machine can therefore exchange mechanical power with the turbocompressor 3.

The control circuit 6 consists mainly of a converter block 17 connected to machine ME1, a converter block 18 connected to machine ME2 and a control unit 19 to pilot blocks 17 and 18.

These blocks convert the alternating current produced by the machines ME1 and ME2 when operating as generator of direct current equal in value to that of the battery or, vice-versa, convert a direct current to an alternating current to supply the above-mentioned machines when operating as motor. Blocks 17 and 18 have respective direct current terminals connected between them through an electrical line 22 and can operate in both directions, or in other words transmit electrical power in either direction between the electrical machines ME1 and ME2 generated by the control unit 1, and regulate the value of the electrical power transmitted, in response to an electrical input signal sl or s2.

The control unit 19 is equipped with at least one microprocessor 20 and has a memory 21 which stores a program and a number of regulating maps, as described below.

The control unit 19 also, in known way, receives a number of further input signals indicating the operating conditions in unit 1 and more generally the vehicle, including a signal s4 linked to the engine revolutions and a signal s5 linked to the engine load and generated by a potentiometer 26 linked to a vehicle accelerator pedal in accordance with the degree of depression of the said pedal.

The control unit 19 is connected to the element 15 that activates the braking device 14 and is capable of sending said element a signal s6 activating a response to a signal value s3 that represents a pressed brake pedal condition.

The control unit 19 is lastly connected to a vehicle service braking system T, to which it can send control signals s7.

To line 22 vehicle auxiliary electrical loads, indicated as a whole by the number 28, are connected. Line 22 is also selectively connectable to a vehicle battery 29 through a switching block 30, and in particular to starting and when the battery has to be recharged.

Unit 1 functions as follows.

The control unit 19, through cyclical acquisition of the input signals (particularly signals s3, s4 and s5), reads the unit 1 operating conditions.

The electrical machines ME1, ME2 are controlled under different logics according to whether the engine is working normally (i.e. supplying motive power) or whether a braking action is required.

In the first case the control unit 19 controls the power flow from and to the electrical machines ME1 and ME2 on the basis of stored regulating maps. The control logics may vary according to the specific application, i.e. the type of vehicle for which the unit 1 is used, and can be selected with the greatest flexibility.

As an example, when the engine 2 is operating in an intermediate field of rotating speed, the electrical power exchanged by the machine ME1 may be virtually nil, in which case the electrical machine ME2 may operate in the same way as a normal alternator, generating the electrical power necessary to supply the vehicle auxiliary loads 28 or to recharge the battery 29, if necessary.

At low engine running speeds, a situation characterised by reduced flow of exhaust gases in the exhaust manifold, or at medium-high running speed but with partial load, the electrical machine ME1 is made to operate as motor, thus bringing the turbocompressor to high rotating speed and hence ensuring supercharging at the levels desired for the different operating conditions. Operation of the machine ME1 as motor may be independent of load or subject to operation of the accelerator pedal. In either case the available torque at low running speed is appreciably increased.

At high engine running speeds and high loads the electrical machine ME1 is made to operate as a generator, and machine ME2 as motor; in this way the excess mechanical power available to the turbo-compressor 3 as a result of the high flow of exhaust gases is converted to electrical power and supplied to the driving shaft 5, thus, given equality of performances, reducing the thermal power demand and hence consumption.

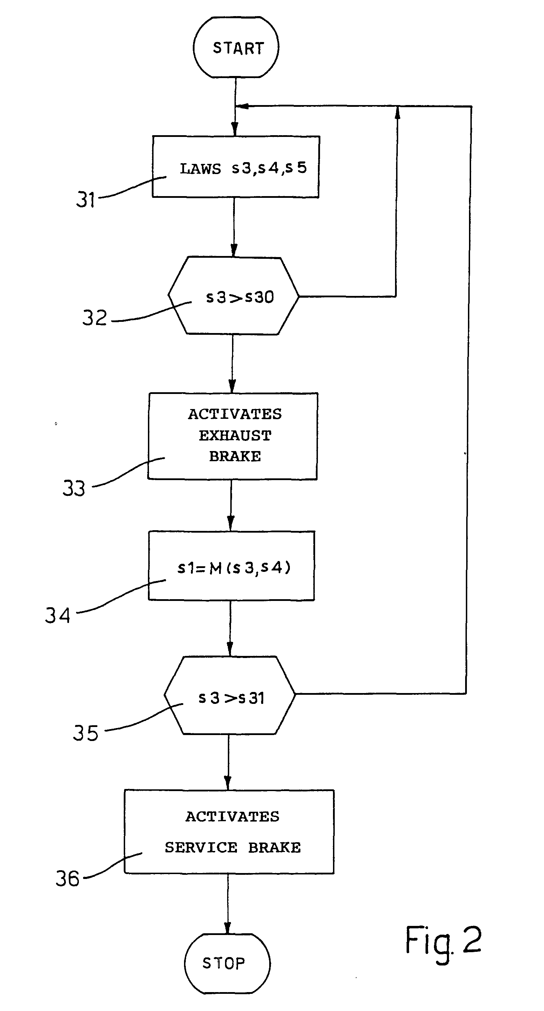

The program carried out by the control unit 19 in braking conditions, which defines the method of control of the unit 1 according to this invention, is described below with reference to Figure 2.

From a starting block the cycle passes to a block 31 acquiring the input signals s3, s4, s5. In a subsequent block 32 the s3 signal is compared with a minimum reference value s30 which defines a brake pedal 25 activation threshold; if the value of s3 is lower than the threshold value, and hence the brake pedal is not pressed, the cycle is rerun from the start; if, on the contrary, s3 is higher than s30 the cycle continues to a subsequent block 33, in which an activation command is given to the decompression braking device. The control unit 19 therefore generates an activation signal s6 for the element 15 to activate the device 14.

From block 33 the cycle moves to block 34 in which a piloting signal sl is generated for the convertor block 17, the value of which is obtained from a map stored in the memory 21 of control unit 19 as a function of the values of the signals s3, s4. For every value of s4 this map contains a value of the signal sl as a function of the signal s3 read.

In practice, for every engine running speed read, the map defines a level of electrical power to be supplied to machine ME1 as a function of the degree of brake pedal depression. The electrical power varies from a minimum value corresponding to a reduced brake pedal stroke to a maximum value corresponding to the brake pedal pressed beyond an upper threshold value s31. With a given brake pedal position the electrical power values defined by the map are the greater, the lower the engine rotating speed.

From block 34 the cycle moves to a block 35 in which the s3 signal is compared with the threshold signal s31. If s3 is lower than s31 the cycle is rerun from the start; if, on the contrary, s3 is higher than s31 the cycle continues to a subsequent block 36 which activates the service brakes and then to the end of the cycle.

If therefore the brake pedal is pressed beyond a preset limit, braking is not entrusted only to the device 14, as is the case in the first part of the stroke, but the service brake also comes into operation.

The electrical power supplied to the machine ME1 is taken from the machine ME2, which acts as a generator; an additional mechanical load is therefore produced on the driving shaft, further increasing the braking torque. The effect of the braking torque increase, as compared with conventional solutions, is particularly marked at low running speeds, at which the contribution made by machine ME1 to supercharging is particularly marked.

A further increase in braking torque can be obtained by taking from machine ME2 further electrical power for supply of auxiliary loads, thus increasing the resistant torque on the driving shaft. For example, the engine cooling system fan can be automatically activated by means of a command signal s8.

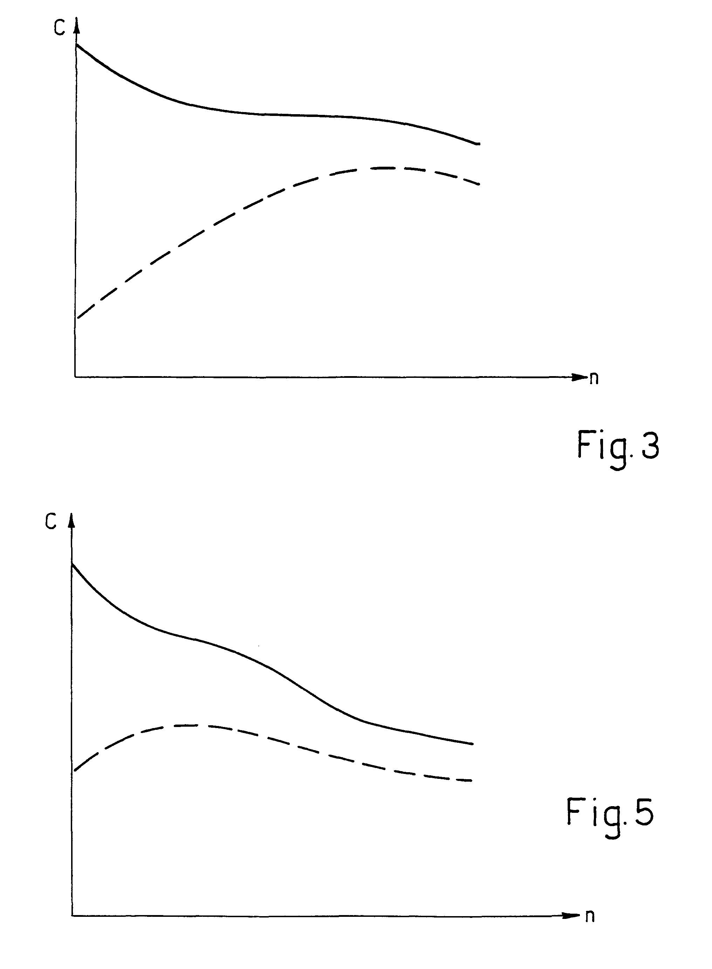

Figure 3 is a diagram giving the value of the braking torque (C) as a function of engine running speed in number of r.p.m. (n); the dashed curve represents the trend in the case of an engine with turbocompressor having a variable geometry turbine, while the continuous curve illustrates the trend obtainable with a driving unit constructed according to this invention and having an identical engine.

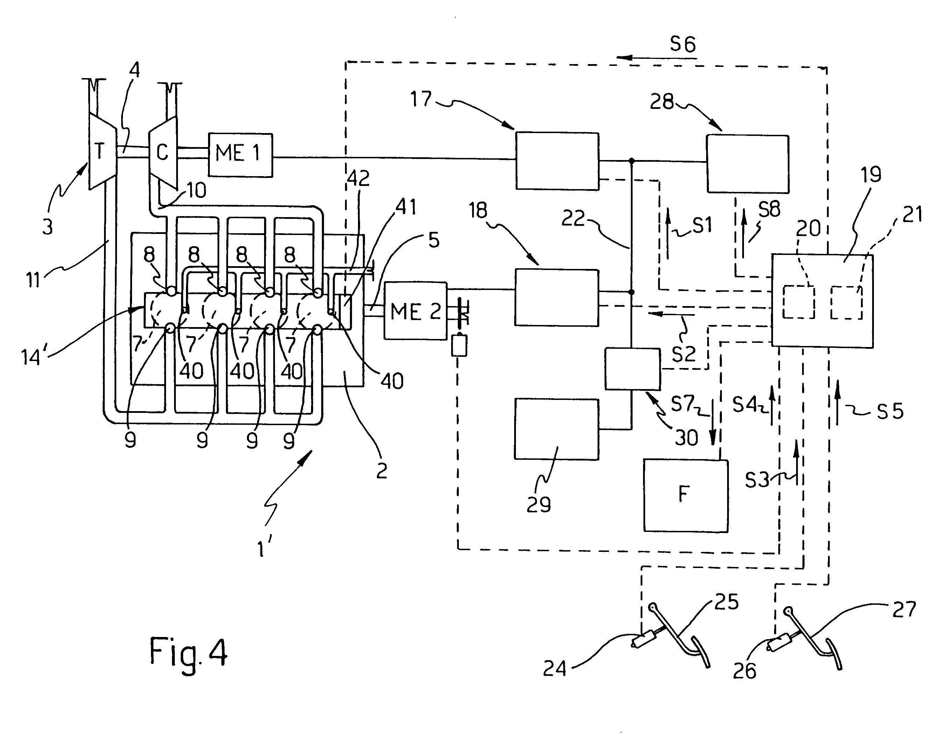

Figure 4 diagrammatically illustrates a driving unit 1 having a different form of implementation of this invention and in which the heat engine 2 has a braking device 14' with auxiliary decompression valves 40 of the type illustrated in the Italian patent application No. TO92A 000974 of 30th November 1992, the contents of which are incorporated here by reference, as regards the necessary parts.

The valves 10, operated by an engine camshaft (not illustrated) and activated in a known way through valve action controlled by unit 19, communicate with a compressed air tapping manifold 42 connected to a vehicle pneumatic system (not illustrated).

Figure 2 is a diagram similar to the one in Figure 3, but relating to the comparison between a conventional engine (dashed line) and the driving unit 1' in Figure 4. The results obtainable are even better than those of the curve in Figure 3 referring to unit 1, especially at slow running speeds.

An examination of the characteristics of the unit 1 constructed according to the requirements of this invention shows the evident advantages that can be obtained with it.

In the first place, when the decompression braking device is operated, the electrical machine ME1 is energised and increases the turbo-compressor rotating speed, thus obtaining higher engine supercharging. The greater inlet pressure thus obtained results in higher compression work and hence an increased braking effect, particularly at low running speeds.

The electrical control of the turbocompressor rotating speed allows a fixed geometry turbine to be used, thus obviating the higher costs involved in use of a variable geometry turbine and related control, and in any case providing greater braking power as compared with use of a variable geometry turbine.

This does not however exclude the use of a variable geometry turbine, the specific advantages of which are now partly outdated.

In addition, the electrical power supplied to machine ME1 is modulated according to the degree of depression of the brake pedal. In this way the driver can graduate braking intensity in a conventional way through a single regulator.

The electrical power supplied to the machine ME1 is taken from the machine ME2, thus increasing the braking action on the driving shaft. This action can lastly be further enhanced through automatic activation of auxiliary electrical loads.

Finally it is evident that changes and variants can be introduced into the unit 1 described.

In particular, the form of actuation of device 14 and the control logic of machines ME1 and ME2 in the field of normal engine operation (i.e. not during braking) can be varied. In addition, with regard to driving unit 1', the braking action can be modulated by playing on the number of cylinders in which the decompression valve is activated.

## Claims

1. Vehicle driving unit of the type consisting of:
- an heat engine (2) having a number of cylinders (7), a feed manifold (10) and an exhaust manifold (11), the said cylinders (7) each having at least one intake valve (9) communicating with the said feed manifold (10) and at least one exhaust valve communicating with the said exhaust manifold (11);
- a decompression braking device (14) on the said engine (2);
- an engine supercharging device (3) consisting of a turbine (T) connected to the said exhaust manifold (11), a compressor (C) connected to the said feed manifold (10) and a first reversible electrical machine (ME1) operationally coupled to the said compressor (C) and to the said turbine (T) in order to exchange mechanical power with them;
- means of control (6) of the said electrical machine (ME1) in response to input signals (s3, s4, s5) linked to operating parameters of the said vehicle;
characterised by the fact that the said means of control (6) include means of supply (17) of electrical power to said first electrical machine (ME1), which therefore operates as a motor to increase the said compressor's rotating speed in response to at least a first input signal (s3) indicating a state of activation of the said decompression braking device.

2. Unit according to Claim 1, characterised by the fact that the said turbine (T) is of fixed geometry type.

3. Unit according to Claim 1 or 2, characterised by the fact of including transducer means (24) linked to a vehicle brake pedal (25), the said first input signal being generated by the said transducer means (24).

4. Unit according to Claim 3, characterised by the fact that the said means of control (6) include means (19, 17) of regulating the electrical power supplied by the said first electrical machine (ME1) according to the value of the said first input signal (s3).

5. Unit according to Claim 4, characterised by the fact that the said means of control include means of activation (19) of a vehicle service brake in response to a value of the said first input signal (s3) greater than a preset threshold value (s31).

6. Unit according to Claim 4 or 5, characterised by the fact that the said means of control (6) include a microprocessor control unit (19) having memory capacity (21) in which are stored maps regulating the said electrical power supplied to the first electrical machine (ME1) on the basis of the value of the said first input signal (s3) and at least a second input signal (s4) linked to the engine running speed, the said power supplied to the said first electrical machine (ME1) on the basis of the said maps rising with the degree of depression of the said brake pedal (25) at a given engine running speed and falling with increase in engine running speed at a given degree of depression of the brake pedal (25).

7. Unit according to one of the foregoing claims, characterised by the fact of including a second reversible electrical machine (ME2) operationally connected to a driving shaft (5) of the said engine (2) and electrically connected to the said first electrical machine (ME1) in order to exchange electrical power with it.

8. Unit according-to any of the foregoing claims. characterised by the fact of including means (19) of activation of at least one auxiliary electrical load (28) of the said vehicle.

9. Unit according to any of the foregoing claims, characterised by the fact that the said decompression braking device (14) includes a number of auxiliary decompression valves communicating with a manifold (42) tapping compressed air from the said engine (2) and designed for connection to a pneumatic system on the said vehicle.

10. Method of control of a vehicle driving unit 91) consisting of:
- an heat engine (2) having a number of cylinders (7), a feed manifold (10) and an exhaust manifold (11), the said cylinders (7) each having at least one intake valve (8) communicating with the said feed manifold (10) and at least one exhaust valve (9) communicating with the said exhaust manifold (11);
- a decompression braking device (14) on the said engine (2);
- an engine supercharging device (3) consisting of a turbine (T) connected to the said exhaust manifold (11), a compressor (C) connected to the said feed manifold (10) and a first reversible electrical machine (ME1) coupled to the said compressor (C) and to the said turbine (T) in order to exchange mechanical power with them;
the said method being characterised by the phases of reading activation of the said decompression braking device (14) and supplying electrical power to said first electrical machine (ME1) in order to make it operate as motor and to increase the compressor's rotating speed when the said decompression braking device is operated.

11. Method according to Claim 10, characterised by the fact that the said phase of reading activation of the decompression braking device (14) includes the operation of reading the value of a signal (s3) generated by transducer means (24) linked to a vehicle brake pedal (25).

12. Method according to Claim 11, characterised by the fact that the phase of supplying electrical power to the said first electrical machine (ME1) includes a phase of regulating the said electrical power as a function at least of the value of the said first input signal (s3);

13. Method according to Claim 12, characterised by the fact of including a phase of activation of a vehicle service brake (F) in response to a value of the said first input signal (s3) higher than a preset threshold value (s31).

14. Method according to Claim 12 or 13, characterised by the fact that the said phase of regulation of the said electrical power supplied to the said first electrical machine (ME1) is governed by maps memorised as a function of the value of the said first input signal (s3) and at least a second input signal (s4) linked to the engine running speed, the said power supplied to the first electrical machine (ME1) on the said maps rising with the degree of depression of the said brake pedal (25) at a given engine running speed and falling with the increase in engine running speed at a given degree of depression of the brake pedal (25).

15. Method according to any of the claims from 10 to 14, characterised by the fact of including a phase of automatic activation of at least one vehicle auxiliary electrical load (28).

## Patentansprüche

1. Fahrzeugantriebseinheit des Typs bestehend aus:
- einer Wärmemaschine (2) mit einer Anzahl von Zylindern (7), einem Zuführungs-Verteilungsrohr (10) und einem Auslass-Verteilrohr (11), wobei die Zylinder (7) jeweils wenigstens ein Einlass-Ventil (9), welches mit dem Zuführungs-Verteilrohr kommuniziert, und wenigstens ein Auslassventil, welches mit dem Auslass-Verteilrohr (11) kommuniziert, aufweisen;
- einer Dekompressions-Bremseinrichtung auf der Maschine (2) ;
- einer Maschinen-Überkompressions-Einrichtung (3), bestehend aus einer Turbine (T), die mit dem Auslass-Verteilrohr (11) verbunden ist, einem Kompressor (C), der mit dem Zuführungs-Verteilrohr (10) verbunden ist, und einer ersten reversiblen elektrischen Maschine (ME1), die betriebsmäßig mit dem Kompressor (C) und mit der Turbine (T) gekoppelt ist, um eine mechanische Leistung mit diesen auszutauschen;
- einer Einrichtung zur Steuerung (6) der elektrischen Maschine (ME1) im Ansprechen auf Eingangssignale (s3, s4, s5), die mit Betriebsparametern des Fahrzeugs in Verbindung stehen;
***gekennzeichnet durch*** die Tatsache, dass die Einrichtung zur Steuerung (6) eine Einrichtung zum Zuführen (17) von elektrischer Leistung an die erste elektrische Maschine (ME1) umfasst, die deshalb als ein Motor arbeitet, um die Kompressor-Drehgeschwindigkeit in Reaktion auf wenigstens ein erstes Eingangssignal (s3), welches einen Zustand einer Aktivierung der Dekompressions-Bremseinrichtung anzeigt, zu erhöhen.

2. Einheit nach Einspruch 1, ***gekennzeichnet durch*** die Tatsache, dass es sich bei der Turbine (T) um einen Typ mit fester Geometrie handelt.

3. Einheit nach Anspruch 1 oder 2, ***gekennzeichnet durch*** die Tatsache, dass eine Wandlereinrichtung (24) enthalten ist, die mit einem Fahrzeugbremspedal (25) in Verbindung stehen, wobei das erste Eingangssignal von der Wandlereinrichtung (24) erzeugt wird.

4. Einheit nach Anspruch 3, ***gekennzeichnet durch*** die Tatsache, dass die Einrichtung zur Steuerung (6) eine Einrichtung (19, 17) zum Regeln der elektrischen Leistung, die durch die besagte erste elektrische Maschine (ME1) zugeführt wird, in Übereinstimmung mit dem Wert des ersten Eingangssignals (s3) umfasst.

5. Einheit nach Anspruch 4, ***gekennzeichnet durch*** die Tatsache, dass die Einrichtung zur Steuerung eine Einrichtung zur Aktivierung (19) einer Fahrzeugservicebremse im Ansprechen darauf, dass ein Wert des ersten Eingangssignals (s3) größer als ein voreingestellter Schwellenwert (s31) ist, umfasst.

6. Einheit nach Anspruch 4 oder 5, ***gekennzeichnet durch*** die Tatsache, dass die Einrichtung zur Steuerung (6) eine Mikroprozessorsteuereinrichtung (19) mit einer Speicherkapazität (21) aufweist, in der Karten gespeichert sind, die die an die erste elektrische Maschine (ME1) zugeführte elektrische Leistung auf Grundlage des Werts des ersten Eingangssignals (s3) und wenigstens eines zweiten Eingangssignals (s4), welches mit der Maschinenlaufgeschwindigkeit in Verbindung steht, regeln, wobei die an die erste elektrische Maschine (ME1) auf Grundlage der Karten zugeführten Leistung mit dem Grad einer Niederdrückung des Bremspedals (25) bei einer gegebenen Maschinenlaufgeschwindigkeit ansteigt und mit einer Erhöhung der Maschinenlaufgeschwindigkeit bei einem gegebenen Niederdrückungsgrad des Bremspedals (25) abfällt.

7. Einheit nach einem der vorangehenden Ansprüche, ***gekennzeichnet durch*** die Tatsache, dass eine zweite reversible elektrische Maschine (ME2) eingeschlossen ist, die betriebsmäßig mit einer Antriebswelle (5) der Maschine (2) verbunden und mit der ersten elektrischen Maschine (ME1) elektrisch verbunden ist, um elektrische Leistung damit auszutauschen.

8. Einheit nach einem der vorangehenden Ansprüche, ***gekennzeichnet durch*** die Tatsache, dass eine Einrichtung (19) für eine Aktivierung von wenigstens einer zusätzlichen elektrischen Last (28) des besagten Fahrzeugs eingeschlossen ist.

9. Einheit nach einem der vorangehenden Ansprüche, ***gekennzeichnet durch*** die Tatsache, dass die Dekompressions-Bremseinrichtung (14) eine Anzahl von Zusatzdekompressionsventilen umfasst, die mit einem Verteilrohr (42) kommunizieren, welches komprimierte Luft von der Maschine (2) abzapft und für eine Verbindung mit einem pneumatischen System des Fahrzeugs ausgelegt ist.

10. Verfahren zur Steuerung einer Fahrzeugantriebseinheit (1), bestehend aus:
- einer Wärmemaschine (2) mit einer Anzahl von Zylindern (7), einem Zuführungs-Verteilrohr (10) und einem Auslass-Verteilrohr (11), wobei die besagten Zylinder (7) jeweils wenigstens ein Einlassventil (8), welches mit dem Zuführungs-Verteilrohr (10) kommuniziert, und wenigstens ein Auslassventil (9), welches mit dem Auslass-Verteilrohr (11) kommuniziert, aufweisen;
- einer Dekompressions-Bremseinrichtung (14) auf der Maschine (2);
- einer Maschinen-Überkompressions-Einrichtung (3), bestehend aus einer Turbine (T), die mit dem Auslass-Verteilrohr verbunden ist, einem Kompressor (C), der mit dem Zuführungs-Verteilrohr (10) verbunden ist, und einer reversiblen elektrischen Maschine (ME1), die mit dem Kompressor (C) und mit der Turbine (T) gekoppelt ist, um eine mechanische Leistung mit diesen auszutauschen;
wobei das Verfahren ***gekennzeichnet ist durch*** die Phasen zum Lesen einer Aktivierung der Dekompressions-Bremseinrichtung (14) und zum Zuführen von elektrischer Leistung an die erste elektrische Maschine (ME1), um sie zu veranlassen, als Motor zu arbeiten, und um die Kompressor-Drehgeschwindigkeit zu erhöhen, wenn die Dekompressions-Bremseinrichtung betrieben wird.

11. Verfahren nach Anspruch 10, ***gekennzeichnet durch*** die Tatsache, dass die Phase zum Lesen einer Aktivierung der Dekompressions-Bremseinrichtung (14) den Betrieb des Lesens des Werts eines Signals (s3), welches von einer Wandlereinrichtung (24) erzeugt wird, die mit einem Fahrzeugbremspedal (25) verbunden ist, umfasst.

12. Verfahren nach Anspruch 11, ***gekennzeichnet durch*** die Tatsache, dass die Phase zum Zuführen von elektrischer Leistung an die erste elektrische Maschine (ME1) eine Phase zum Regeln der elektrischen Leistung als Funktion wenigstens des Werts des ersten Eingangssignals (s3) umfasst.

13. Verfahren nach Anspruch 12, ***gekennzeichnet durch*** die Tatsache, dass eine Phase einer Aktivierung einer Fahrzeugservicebremse (F) in Reaktion darauf, dass ein Wert des ersten Eingangssignals (s3) höher als ein voreingestellter Schwellenwert (s31) ist, eingeschlossen ist.

14. Verfahren nach Anspruch 12 oder 13, ***gekennzeichnet durch*** die Tatsache, dass die Phase einer Regelung einer elektrischen Leistung, die an die erste elektrische Maschine (ME1) zugeführt wird, von Karten geführt wird, die als eine Funktion des Werts des ersten Eingangssignals (s3) und wenigstens eines zweiten Eingangssignals (s4), welches mit der Maschinenlaufgeschwindigkeit in Verbindung steht, gespeichert sind, wobei die Leistung, die an die erste elektrische Maschine (ME1) auf den Karten zugeführt wird, sich mit dem Niederdrückungsgrad des Bremspedals (25) bei einer gegebenen Maschinenlaufgeschwindigkeit erhöht und mit der Erhöhung der Maschinenlaufgeschwindigkeit bei einem gegebenen Niederdrückungsgrad des Bremspedals (25) abfällt.

15. Verfahren nach einem der Ansprüche 10 bis 14, ***gekennzeichnet durch*** die Tatsache, dass eine Phase einer automatischen Aktivierung wenigstens einer elektrischen Fahrzeugzusatz-Last (28) eingeschlossen ist.

## Revendications

1. Unité d'entraînement de véhicule du type constitué par :
un moteur thermique (2) comprenant un certain nombre de cylindres (7), un collecteur d'admission (10) et un collecteur d'échappement (11), lesdits cylindres (7) comprenant chacun au moins une soupape d'admission (8) communiquant avec ledit collecteur d'admission (10) et au moins une soupape d'échappement communiquant avec ledit collecteur d'échappement (11);
un dispositif de freinage à décompression (14) sur ledit moteur (2) ;
un dispositif de suralimentation de moteur (3) constitué par une turbine (T) raccordée audit collecteur d'échappement (11), un compresseur (C) raccordé audit collecteur d'admission (10) et une première machine électrique réversible (ME1) couplée de manière opérationnelle audit compresseur (C) et à ladite turbine (T) dans le but d'échanger de la puissance mécanique entre eux ;
un moyen de commande (6) de ladite machine électrique (ME1) en réponse à des signaux d'entrée (s3, s4, s5) associés à des paramètres de fonctionnement dudit véhicule ;
caractérisée par le fait que ledit moyen de commande (6) comprend un moyen d'alimentation (17) en puissance électrique de ladite première machine électrique (ME1), qui fonctionne, par conséquent, en moteur afin d'augmenter la vitesse de rotation dudit compresseur en réponse à au moins un premier signal d'entrée (s3) indiquant un état d'activation dudit dispositif de freinage à décompression.

2. Unité selon la revendication 1, caractérisée par le fait que ladite turbine (T) est du type à géométrie fixe.

3. Unité selon la revendication 1 ou 2, caractérisée par le fait qu'elle comprend un moyen formant transducteur (24) associé à une pédale de frein de véhicule (25), ledit premier signal d'entrée étant produit par ledit moyen formant transducteur (24).

4. Unité selon la revendication 3, caractérisée par le fait que ledit moyen de commande (6) comprend des moyens (19, 17) de régulation de la puissance électrique fournie par ladite première machine électrique (ME1) en fonction de la valeur dudit premier signal d'entrée (s3).

5. Unité selon la revendication 4, caractérisée par le fait que ledit moyen de commande comprend un moyen d'activation (19) d'un frein de service de véhicule en réponse à une valeur dudit premier signal d'entrée (s3) supérieure à une valeur de seuil présélectionnée (s31).

6. Unité selon la revendication 4 ou 5, caractérisée par le fait que ledit moyen de commande (6) comprend une unité de commande à microprocesseur (19) comportant une capacité de mémoire (21) dans laquelle sont mémorisées des cartes de régulation de ladite puissance électrique fournie à la première machine électrique (ME1) en fonction de la valeur dudit premier signal d'entrée (s3) et d'au moins un second signal d'entrée (s4) associé au régime de moteur, ladite puissance fournie à ladite première machine électrique (ME1) sur la base desdites cartes, augmentant avec le niveau d'enfoncement de ladite pédale de frein (25) pour un régime de moteur donné, et diminuant avec l'augmentation du régime de moteur pour un niveau donné d'enfoncement de la pédale de frein (25).

7. Unité selon une des revendications précédentes, caractérisée par le fait qu'elle comprend une seconde machine électrique réversible (ME2) couplée de manière opérationnelle à un arbre d'entraînement (5) dudit moteur (2) et couplée électriquement à ladite première machine électrique (ME1) dans le but d'échanger de la puissance électrique avec elle.

8. Unité selon l'une quelconque des revendications précédentes,
caractérisée par le fait qu'elle comprend un moyen (19) d'activation d'au moins une charge électrique auxiliaire (28) dudit véhicule.

9. Unité selon l'une quelconque des revendications précédentes,
caractérisée par le fait que ledit dispositif de freinage à décompression (14) comprend un certain nombre de soupapes de décompression auxiliaires communiquant avec un collecteur (42), prélevant de l'air comprimé à partir dudit moteur (2) et conçu pour assurer la liaison avec un dispositif pneumatique sur ledit véhicule.

10. Procédé de commande d'une unité d'entraînement de véhicule (1), constitué par :
un moteur thermique (2) comprenant un certain nombre de cylindres (7), un collecteur d'admission (10) et un collecteur d'échappement (11), lesdits cylindres (7) comprenant chacun au moins une soupape d'admission (8) communiquant avec ledit collecteur d'admission (10) et au moins une soupape d'échappement (9) communiquant avec ledit collecteur d'échappement (11) ;
un dispositif de freinage à décompression (14) sur ledit moteur (2) ;
un dispositif de suralimentation de moteur (3) constitué par une turbine (T) raccordée audit collecteur d'échappement (11), un compresseur (C) raccordé audit collecteur d'admission (10) et une première machine électrique réversible (ME1) couplée audit compresseur (C) et à ladite turbine (T) dans le but d'échanger de la puissance mécanique entre eux ;
ledit procédé étant caractérisé par les phases de lecture de l'activation dudit dispositif de freinage à décompression (14) et d'alimentation en puissance électrique de ladite première machine électrique (ME1) dans le but de la faire fonctionner en moteur et d'augmenter la vitesse de rotation du compresseur lorsque ledit dispositif de freinage à décompression est activé.

11. Procédé selon la revendication 10, caractérisé par le fait que ladite phase de lecture d'activation du dispositif de freinage à décompression (14) comprend l'opération de lecture de la valeur d'un signal (s3) produit par un moyen formant transducteur (24) associé à une pédale de frein (25) de véhicule.

12. Procédé selon la revendication 11, caractérisé par le fait que la phase d'alimentation en puissance électrique de ladite première machine électrique (ME1) comprend une phase de régulation de ladite puissance électrique en fonction d'au moins la valeur dudit premier signal d'entrée (s3).

13. Procédé selon la revendication 12, caractérisé par le fait qu'il comprend une phase d'activation d'un frein de service de véhicule (F) en réponse à une valeur dudit premier signal d'entrée (s3) supérieure à une valeur de seuil présélectionnée (s31).

14. Procédé selon la revendication 12 ou 13, caractérisé par le fait que ladite phase de régulation de ladite puissance électrique fournie à ladite première machine électrique (ME1) est régie par des cartes mémorisées en fonction de la valeur dudit premier signal d'entrée (s3) et d'au moins un deuxième signal d'entrée (s4) associé au régime de moteur, ladite puissance fournie à la première machine (ME1) à partir de desdites cartes, augmentant avec le niveau d'enfoncement de ladite pédale de frein (25) pour un régime de moteur donné, et diminuant avec l'augmentation du régime de moteur pour un niveau donné d'enfoncement de la pédale de frein (25).

15. Procédé selon l'une quelconque des revendications 10 à 14,
caractérisé par le fait qu'il comprend une phase d'activation automatique d'au moins une charge auxiliaire de véhicule (28).
